# EUROPEAN PATENT APPLICATION

(11) **EP 2 559 873 A1**
(43) Date of publication of application: **20.02.2013**
(21) Application number: 10849784.3
(22) Date of filing: 15.04.2010
(51) Int. Cl.: F01N 3/20, F01N 3/02

(54) **EXHAUST GAS PURIFICATION DEVICE FOR INTERNAL COMBUSTION ENGINE**

(71) Applicant: Toyota Jidosha Kabushiki Kaisha, Toyota-shi, Aichi 471-8571 (JP)
(72) Inventor: TANAKA, Mirai, Toyota-shi Aichi 471-8571 (JP)
(74) Representative: Smith, Samuel Leonard
(86) International application number: PCT/JP2010/002752
(87) International publication number: WO 2011/128943

(57) **Abstract**

The present invention provides an exhaust gas purifying apparatus in an internal combustion engine comprising an oxidation accelerator (R1) provided upstream of an exhaust gas purifying member (M) in an exhaust passage (P), fuel adding means (R2) and heating means (R3) positioned upstream of the oxidation accelerator (R1) andcontrolmeans (C) forcontrollingoperations of the fuel adding means and the heating means. The control means (C) operates only the fuel adding means (R2) when a temperature of the exhaust gas purifying member is within a predetermined temperature range and a flow speed of the exhaust gas is equal to or more than a predetermined speed, and operates the heating means (R3) and the fuel adding means (R2) when the temperature of the exhaust gas purifying member is within the predetermined temperature range and the flow speed of the exhaust gas is less than the predetermined speed.

## Description

### Technical Field

The present invention relates to an exhaust gas purifying apparatus in an internal combustion engine for purifying an exhaust gas.

### Background Art

Patent Literature 1 discloses a catalyst temperature raising apparatus for raising a temperature of a catalyst for purifying an exhaust gas in an engine. According to the description of Patent Literature 1, an exhaust passage is provided with an addition valve equipped with an injection opening for injecting fuel and igniting means equipped with a heating portion for igniting the fuel upstream of the catalyst in the exhaust passage. The addition valve and the igniting means are arranged in positions in which the fuel injected from the injection opening of the addition valve makes direct contact with the heating portion of the igniting means.

### Citation List

### Patent Literature

PTL 1: Japanese Patent Laid-Open No. 2006-112401

### Summary of Invention

Incidentally the apparatus in Patent Literature 1 is provided with the aforementioned construction for raising a temperature of an exhaust gas purifying catalyst provided in the exhaust passage immediately after starting up the internal combustion engine, but it is desired that the temperature control of the exhaust gas purifying catalyst continues to be performed thereafter for continuing to appropriately purify the exhaust gas. However, Patent Literature 1 does not disclose the temperature control of the exhaust gas purifying catalyst after the warming-up completion.

On the other hand, when an operating condition of the internal combustion engine is changed, a flowing state of the exhaust gas flowing in the exhaust passage is possibly changed. Such a change in the flowing state of the exhaust gas has an impact on ignition of fuel by the ignition means in the apparatus of Patent Literature 1. Therefore, it is effective to take into account the flowing state of the exhaust gas at the time of the temperature control of the exhaust gas purifying catalyst.

Therefore, the present invention is made in view of the foregoing problem and an object of the present invention is to appropriately control a temperature of an exhaust gas purifying member such as a catalyst provided in an exhaust passage, after the warming-up at a start time of an internal combustion engine.

The present invention provides an exhaust gas purifying apparatus in an internal combustion engine with an exhaust passage provided with an exhaust gas purifying member therein, comprising a catalyst provided upstream of the exhaust gas purifying member and having an oxidation function, fuel adding means positioned upstream of the catalyst, heating means positioned upstream of the catalyst, and control means for controlling an operation of the fuel adding means and an operation of the heating means, wherein the control means operates the fuel adding means without operating the heating means when a temperature of the exhaust gas purifying member is within a predetermined temperature range and a flow speed of the exhaust gas is equal to or more than a predetermined speed, and operates the heating means, as well as the fuel adding means when the temperature of the exhaust gas purifying member is within the predetermined temperature range and the flow speed of the exhaust gas is less than the predetermined speed.

The control means may operate the fuel adding means without operating the heating means when the temperature of the exhaust gas purifying member is within the predetermined temperature range, a temperature of the exhaust gas is less than a predetermined exhaust gas temperature and the flow speed of the exhaust gas is equal to or more than the predetermined speed.

### Brief Description of Drawings

[Fig. 1] Fig. 1 is an outline diagram for explaining a basic construction example of an exhaust gas purifying apparatus in an internal combustion engine according to the present invention;
[Fig. 2] Fig. 2 is a schematic construction diagram showing an internal combustion engine system to which the exhaust gas purifying apparatus in the internal combustion engine according to a first embodiment of the present invention is applied; and
[Fig. 3] Fig. 3 is a diagram for explaining an operation of a fuel adding valve and an operation of a glow plug in Fig. 2.

### Description of Embodiments

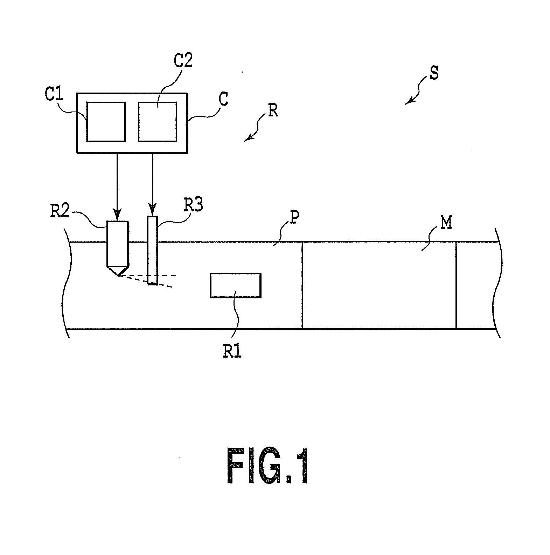

First, a basic construction example of an exhaust gas purifying apparatus in an internal combustion engine according to the present invention will be explained with reference to Fig. 1. In Fig. 1, an exhaust gas purifying apparatus S in an internal combustion engine is provided with an exhaust gas purifying member M provided in an exhaust passage P and a temperature controlling apparatus R for controlling a temperature of the exhaust gas purifying member M. The temperature controlling apparatus R includes an oxidation accelerator R1 provided upstream of the exhaust gas purifying member M, fuel adding means R2 positioned upstream of the oxidation accelerator R1, and heating means R3 positioned upstream of the oxidation accelerator R1. In Fig. 1, the oxidation accelerator R1 containing a catalyst having an oxidation function, the fuel adding means R2 and the heating means R3 all are provided in the exhaust passage P, but at least one or all of these elements may be provided other than the exhaust passage. The fuel adding means R2 and the heating means R3 are arranged such that fuel added by the fuel adding means R2 flows in the circumference of a heating portion in the heating means R3. The temperature controllingmeans R is provided with control means C including fuel addition controlling means C1 for controlling an operation of the fuel adding means R2 and heating controlling means C2 for controlling an operation of the heating means R3.

The temperature controlling apparatus R operates the fuel adding means R2 and the heating means R3 when a temperature of the exhaust gas purifying member M at an engine start time or the like is lower than a predetermined temperature. In consequence, the heating portion of the heating means R3 is heated and the fuel is added from the fuel adding means R2. In this manner the heating gas generated while flowing into and/or in the circumference of the oxidation accelerator R1 is supplied to the exhaust gas purifying member M. As a result, the exhaust gas purifying member M is heated to the predetermined temperature or more.

After the exhaust gas purifying member M is once heated to the predetermined temperature or more, the temperature controlling apparatus R performs the temperature control of the exhaust gas purifying member M as needed to control the temperature of the exhaust gas purifying member M to be maintained in the predetermined temperature or more. When the temperature of the exhaust gas purifying member M detected by a temperature detection apparatus of the exhaust gas purifying member is within a predetermined temperature range and the flow speed of the exhaust gas detected by a flow speed detection apparatus of the exhaust gas is equal to or more than a predetermined speed, the control means C operates the fuel adding means R2 without operating the heating means R3. On the other hand, when the temperature of the exhaust gas purifying member M is within the predetermined temperature range and the flow speed of the exhaust gas is less than the predetermined speed, the control means C operates the heating means R3 and operates the fuel adding means R2. Therefore, combustion or oxidation of the fuel added from the fuel adding means R2 can be appropriately accelerated by the heating means R3 or by the oxidation accelerator R1 to raise the temperature of the exhaust gas purifying member M. It should be noted that, herein the predetermined temperature range is a temperature range equal to or more than the above predetermined temperature set as a target at an engine start time or the like in the temperature control of the exhaust gas purifying member M, but may include the predetermined temperature.

Next, preferred embodiments of the present invention will be explained with reference to the accompanying drawings in detail. First, a first embodiment will be explained.

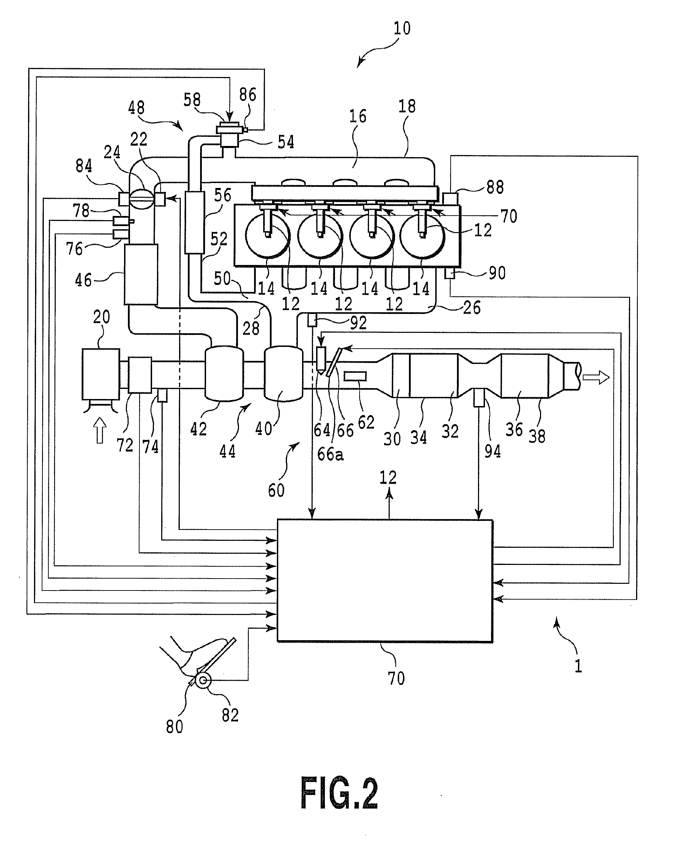

Fig. 2 shows a schematic diagram of an internal combustion engine system in a vehicle to which an exhaust gas purifying apparatus 1 in an internal combustion engine (hereinafter, called exhaust gas purifying apparatus) 1 according to the first embodiment is applied. A internal combustion engine (hereinafter, called engine) 10 is an engine of a type in which a spontaneous ignition is generated by injecting light oil as fuel directly into a combustion chamber in a compression state from a fuel injection valve 12, that is, a diesel engine.

An intake port exposed to the combustion chamber in a cylinder 14 and defining a part of an intake passage 16 is formed in a cylinder head and is opened and closed by an intake valve. An intake manifold 18 defining a part of the intake passage 16 is connected to the cylinder head, and an intake pipe likewise defining a part of the intake passage 16 is connected thereto upstream of the intake manifold 18. An air cleaner 20 is provided at the upstream end side of the intake passage 16 for eliminating dusts and the like in the air introduced into the intake passage 16. In addition, a throttle valve 24 an opening of which is adjusted by a throttle actuator 22 is provided in the halfway of the,intake passage 16.

On the other hand, an exhaust port exposed to the combustion chamber in the cylinder 14 and defining a part of an exhaust passage 26 is formed in the cylinder head and is opened and closed by an exhaust valve. An exhaust manifold 28 defining a part of the exhaust passage 26 is connected to the cylinder head, and an exhaust pipe likewise defining a part of the exhaust passage 26 is connected thereto downstream of the exhaust manifold 28. A first converter 34 accommodating a first exhaust gas purifying member (hereinafter, called first purifying member) 30 and a second exhaust gas purifying member (hereinafter, called second purifying member) 32 in series is provided in the halfway of the exhaust passage 26. Further, a second converter 38 accommodating a third exhaust gas purifyingmember (hereinafter, called third purifying member) 36 is provided in the exhaust passage downstream of the first converter 34. It should be noted that the first purifying member 30, the second purifying member 32 and the third purifying member 36 are included in the exhaust gas purifying apparatus 1.

Herein, the first purifying member 30 contains an oxidation catalyst. The first purifyingmember 30 is formed as a monolithic catalyst carrying a noble metal catalyst such as platinum Pt.

In addition, the second purifying member 32 is a particulate filter for trapping particulate matter (PM) in an exhaust gas. The particulate filter as the second purifying member 32 does not carry the noble metal catalyst. However, the noble metal catalyst such as platinum Pt may be carried on the particulate filter.

Further, the third purifying member 36 contains a catalyst for purifying NOx, herein a NOx absorption catalyst. The third purifying member 36 carries a catalyst carrier, for example, composed of alumina on the base substance. The noble metal catalyst such as platinum Pt is carried on the surface of the catalyst carrier in such a manner as to be scattered thereon, and further, a layer of a NOx absorbent is formed on the surface of the catalyst carrier. The NOx absorbent performs an absorption and release function in such a manner as to absorb NOx when an air-fuel ratio of the exhaust gas is in a lean side and release the absorbed NOx when an oxygen concentration in the exhaust gas is lowered. Such a third purifying member 36 absorbs NOx when the air-fuel ratio of the exhaust gas is in a lean side, and when the oxygen concentration in the exhaust gas is lowered, for example, when the air-fuel ratio in the exhaust gas is in a rich side, releases the NOx absorbed, thus performing a reduction of the NOx. It should be noted that the third purifying member 36 may be provided with a NOx purifying catalyst accelerating a chemical reaction (reduction reaction) between ammonia and NOx. In this case, a urea water adding apparatus may be provided between the first converter 34 and the second converter 38 for ammonia supply, for example.

Further, a turbine 40 including a turbine wheel driven to be rotated by an exhaust gas is provided in the halfway of the exhaust passage 26. However, the turbine 40 is arranged in the exhaust passage upstream of the first converter 34. In correspondence to it, a compressor 42 including a compressor wheel co-axially connected to the turbine wheel and rotated by a rotational force of the turbine wheel is provided in the halfway of the intake passage 16. That is, a turbocharger 44 including the turbine 40 taking out exhaust gas energy and the compressor 42 performing supercharging to the engine 10 by the exhaust gas energy taken out by the turbine 40 is provided in the engine 10. An intercooler 46 for cooling air compressed by the compressor 42 is provided in the intake passage downstream of the compressor 42.

An exhaust gas recirculation (EGR) apparatus 48 for introducing a part of an exhaust gas flowing in the exhaust passage 26 to the intake passage 16 is provided in the engine 10. The EGR apparatus 48 includes an EGR pipe 52 for defining an EGR passage 50 connecting the exhaust passage 26 to the intake passage 16, an EGR valve 54 for adjusting a communicating state of the EGR passage 50, and an EGR cooler 56 for cooling an exhaust gas (EGR gas) to be recirculated. The EGR pipe 52 has one end connected at the upstream side to the exhaust manifold 28 and the other end connected at the downstream side to the intake manifold 18. The EGR valve 54 is provided downstream of the EGR cooler 56 and an opening thereof is adjusted by an actuator 58.

Incidentally the exhaust gas purifying apparatus 1 provided in the engine 10 is further provided with a temperature controlling apparatus 60. The temperature controlling apparatus 60 is provided for controlling a temperature of the aforementioned exhaust gas purifying member. The temperature controlling apparatus 60 is configured to generate a heating gas and supply the heating gas to the first to third purifying members 30, 32 and 36positioned downstream thereof, particularly to the second and thirdpurifyingmembers 32 and 36 for maintaining and accelerating the warming-up or the heating and the active state of the exhaust gas purifying members.

Particularly, herein the temperature controlling apparatus 60 is operated in such a manner that the third purifying member 36 among the three exhaust gas purifying members is heated to a temperature in a predetermined active temperature range of the third purifying member 36 and continues to maintain a temperature in the predetermined active temperature range. In addition, the temperature controlling apparatus 60 is operated for a predetermined time at a predetermining timing for eliminating PM trapped in the second purifying member 32. For example, each time a cumulative operating time of the engine 10 exceeds a predetermined time, the temperature controlling apparatus 60 is operated. It should be noted that the temperature controlling apparatus 60 may function when a pressure difference across the second purifying member 32 is equal to or more than a predetermined pressure. In this case, a pressure sensor for detecting the pressure difference across the second purifying member 32 may be provided.

The temperature controlling apparatus 60 includes an oxidation accelerator 62 provided upstream of the exhaust gas purifying member, a fuel adding valve 64 positioned upstream of the oxidation accelerator 62, and a glow plug 66 positioned upstream of the oxidation accelerator 62. Herein the oxidation accelerator 62, the fuel adding valve 64 and the glow plug 66 are provided in the exhaust passage between the turbine 40 and the first purifying member 30. The fuel adding valve 64 and the glow plug 66 are arranged in such a manner that fuel is injected from the injection opening of the fuel adding valve 64 toward a heating portion 66a of the glow plug 66.

The oxidation accelerator 62 is constructed to contain a catalyst having an oxidation function, specially an oxidation catalyst. The oxidation accelerator 62 is formed as a monolithic catalyst carrying a noble metal catalyst such as platinum Pt. The oxidation accelerator 62 has a size and a configuration defined not to interrupt a flow of the exhaust gas in the exhaust passage 26 and is supported in the exhaust passage 26 by a support member (not shown).

The fuel adding valve 64 is provided as fuel adding means. Specifically the fuel adding valve 64 is provided to add and supply fuel supplied under pressure by a pump from a fuel tank included in a fuel supplying apparatus provided with the fuel injection valve 12. Therefore, herein the fuel adding valve 64, the fuel tank and the pump are included in the fuel adding apparatus, but a fuel supplying system to the fuel adding valve 64 may be constructed independently from the fuel supplying system to the fuel injection valve 12.

The glow plug 66 is constructed as heating means. When power is supplied to the glow plug 66, the heating portion 66a of the glow plug 66 can be heated. The glow plug 66 as the heating means is included in the heating apparatus. However, the glow plug 66 is connected to a direct-current power source and a pressure raising circuit for power supply thereto (not shown). It should be noted that, instead of the glow plug 66, a ceramic heater may be used as the heating means.

The fuel injected from the fuel adding valve 64 goes through the circumference of the heating portion 66a in the glow plug 66 and reaches the oxidation accelerator 62 and the circumference thereof. When the heating portion 66a is heated by the power supply to the glow plug 66, the fuel is subjected to heat from the glow plug 66, possibly being burned, which reaches the oxidation accelerator 62 and the circumference thereof. In addition, oxidation of the fuel, for example, the burning is accelerated by the oxidation accelerator 62. Particularly since the oxidation accelerator 62 contains the oxidation catalyst herein, when a temperature of the oxidation accelerator 62 is within a predetermined active temperature range thereof, the oxidation of the fuel is more preferably accelerated by the oxidation accelerator 62. It should be noted that the oxidation of the fuel by the oxidation accelerator 62 causes a rise in the temperature of the oxidation accelerator 62 itself, thus raising the temperature of the oxidation accelerator 62. In this manner the heating gas is generated and flows to the exhaust gas purifying member. Such heating gas can have a high temperature due to the oxidation of the fuel.

In addition, such heating gas possibly contains reformed fuel. As the temperature of the oxidation accelerator 62 is high, hydrocarbons the carbon number of which is large in the fuel are decomposed in the oxidation accelerator 62, thereby generating hydrocarbons the carbon number of which is small and having high reactivity. Therefore, the fuel is reformed to fuel having high reactivity. In other words, the oxidation accelerator 62 is, on one hand, constructed as a quick heat generator which quickly generates heat and is, on the other hand, constructed as a reformed fuel discharger which discharges the reformed fuel.

In the engine 10 equipped with such a construction, a control device 70 is provided with various kinds of sensors which electrically output signals for detecting various kinds of values (including estimation). Here, some of them will be specially described. An airflow meter 72 for detecting an intake air quantity is provided in the intake passage 16. Herein the airflow meter 72 is used also as a sensor for detecting a flow speed of an exhaust gas. A temperature sensor 74 for detecting a temperature of intake air is provided in the vicinity of the airflow meter 72 and a temperature sensor 76 for detecting a temperature is provided also downstream of the intercooler 46. A pressure sensor 78 for detecting a supercharging pressure is provided in the halfway of the intake passage 16. An accelerator opening sensor 82 for detecting a position corresponding to a depressing amount of an accelerator pedal 80 operated by a driver, that is, an accelerator opening is provided. A throttle position sensor 84 is also provided for detecting an opening of the throttle valve 24. Further, a sensor 86 is also provided for detecting an opening of the EGR valve 54. A crank position sensor 88 for detecting a crank rotational signal of a crank shaft connected to pistons through connecting rods is mounted in the cylinder block in which the pistons reciprocate. Herein the crank position sensor 88 is used also as an engine rotational speed sensor for detecting an engine rotational speed. Further, a temperature sensor 90 is provided for detecting a cooling water temperature of the engine 10. A first exhaust gas temperature sensor 92 and a second exhaust gas temperature sensor 94 as temperature sensors are provided in the exhaust passage 26. It should be noted that herein the first exhaust gas temperature sensor 92 is provided in the exhaust passage upstream of the turbine 40, specially in the exhaust manifold 28, and the second exhaust gas temperature sensor 94 is provided in the exhaust passage near the third purifying member 36, specially between the second purifying member 32 and the third purifying member 36.

The control device 70 is constructed of a microcomputer including a CPU, a memory device (for example, ROM and RAM), an A/D converter, an input interface, an output interface and the like. The above various kinds of the sensors are electrically connected to the input interface. The control device 70 electrically outputs operation signals or driving signals from the output interface based upon output signals or detection signals from the various kinds of the sensors in such a manner that a smooth drive or operation of the engine 10 is performed according to preset programs or the like. In this manner, the operation of the fuel injection valve 12, the opening of the throttle valve 24, the opening of the EGR valve 54, the operation of the fuel adding valve 64, the operation of the glow plug 66 (power supply to the glow plug 66) and the like are controlled.

The control device 70 has a function of control means (control device) in the temperature controlling device 60. That is, a part of the control device 70 can be operated as each of fuel addition controlling means for controlling the operation of the fuel adding valve 64 as the fuel adding means and heating controlling means for controlling the operation of the glow plug 66 as the heating means. In addition, the temperature sensor 92 as the exhaust gas temperature detecting means and a part of the control device 70 are included in the exhaust gas temperature detecting device for detecting a temperature of the exhaust gas. The temperature sensor 94 as exhaust gas purifying member temperature detecting means and a part of the control device 70 are included in an exhaust gas purifying member temperature detecting device for detecting a temperature of the exhaust gas purifying member. The airflow meter 72 used as the flow speed detecting means and a part of the control device 70 are included in an exhaust gas flow speed detecting device for detecting a flow speed of an exhaust gas.

In the engine 10, a fuel injection quantity (fuel quantity) and a fuel injection timing are set based upon an engine operating condition represented by an intake air quantity, an engine rotational speed, and the like, that is, an engine load and an engine rotational speed to obtain a desired output. In addition, injection of the fuel from the fuel injection valve 12 is performed based upon the fuel injection quantity and the fuel injection timing.

In the temperature controlling device 60, the fuel adding valve 64 and the glow plug 66 are operated, for example, such that a temperature of the exhaust gas purifying member quickly rises to a predetermined temperature or more at an engine starting time, particularly herein a temperature of the third purifying member 36 quickly reaches a value within a predetermined active temperature range of the third purifying member 36. That is, power is supplied to the glow plug 66 and fuel is injected toward the heating portion 66a from the fuel adding valve 64. The gas containing the fuel or generated due to the fuel flows through the oxidation accelerator 62 and the circumference thereof and reaches the exhaust gas purifying member. The supply of the gas to the exhaust gas purifying member at the engine starting time is performed from an engine start time and continues to be performed until the temperature of the third purifying member 36 rises to a predetermined temperature within the predetermined active temperature range or more. It should be noted that the predetermined temperature within the predetermined active temperature range of the third purifying member is a lower limit temperature within the predetermined active temperature range, for example, is set to 200°C. However, the supply of the heating gas to the exhaust gas purifying member at the engine starting time may continue to be performed until the engine warming-up is completed even if the temperature of the exhaust gas purifying member quickly rises. In this case, the completion of the engine warming-up is determined based upon a cooling water temperature of the engine 10. For example, when the temperature of the exhaust gas purifying member quickly rises and thereafter, the control device 70 determines that the engine warming-up is completed based upon the event that the cooling water temperature of the engine 10 rises to a predetermined temperature (for example, 70°C) or more, the control device 70 stops both of the operation of the fuel adding valve 64 and the operation of the glow plug 66.

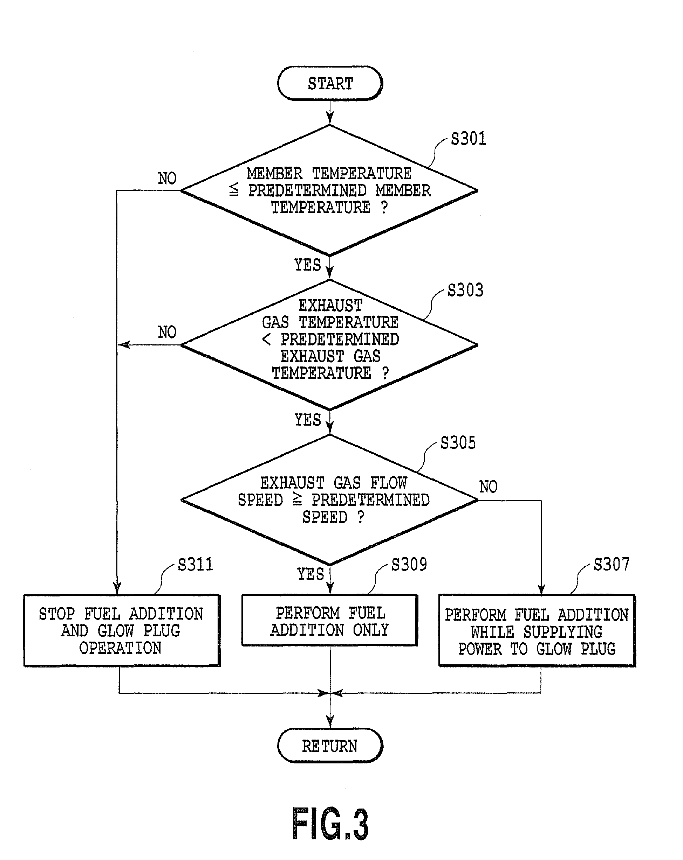

Further, in the first embodiment, the temperature controlling device 60 functions in such a manner that a temperature of the third purifying member 36 reaches a value within the predetermined active temperature range, and thereafter, the temperature of the third purifying member 36 is maintained to be within the predetermined active temperature range. Hereinafter, operation control in both of the fuel adding valve 64 and the glow plug 66 after the engine warming-up completion will be explained with reference to a flow in Fig. 3. It should be noted that the flow in Fig. 3 is repeated after the engine warming-up completion.

The control device 70 determines whether or not the temperature of the third purifying member 36 is equal to or less than a predetermined member temperature (step S301). This determination is made based upon a temperature of the third purifying member 36 estimated (detected) based upon an output signal from the second exhaust gas temperature sensor 94. In addition, herein the predetermined member temperature as a determination reference is set in such a manner as to maintain the temperature of the third purifying member 36 to be within the predetermined active temperature range, and may be a temperature equal to or more than the lower limit temperature in the predetermined active temperature range, herein being set to 250°C. That is, the determination herein is equivalent to a determination on whether or not the temperature of the third purifyingmember 36 is within the predetermined temperature range of 200°C or more to 250°C or less.

When it is determined that the temperature of the exhaust gas purifying member is equal to or less than the predetermined member temperature (positive determination at step S301), it is determined whether or not the temperature of the exhaust gas is less than a predetermined exhaust gas temperature (step S303) . The temperature of the exhaust gas is detected based upon an output signal from the first exhaust gas temperature sensor 92. In addition, the predetermined exhaust gas temperature as the determination reference is defined based upon whether or not there is a possibility that the exhaust gas reduces the temperature of the third purifying member 36 to be lower than the predetermined active temperature range, herein being set to 200°C. This is because in a case where the exhaust gas having a temperature less than 200°C flows in the third purifying member 36, there is a possibility that a temperature of the third purifying member 36 is reduced to less than 200°C.

When it is determined that the temperature of the exhaust gas is less than the predetermined exhaust gas temperature (positive determination at step S303), it is determined whether or not the flow speed of the exhaust gas is equal to or more than a predetermined speed (step S305). The flow speed of the exhaust gas is estimated (detected) based upon an output signal from the airflow meter 72. The predetermined speed is set based upon whether or not it is possible to appropriately achieve a heating function in the heating portion 66a of the glow plug 66 in a power supply state. For example, when the exhaust gas flow speed is equal to or more than a predetermined speed, it is difficult to properly heat the fuel added from the fuel adding valve 64 by the glow plug 66, due to a turbulent function of the exhaust gas.

Accordingly, when the flow speed of the exhaust gas is not equal to or more than the predetermined speed, that is, the flow speed of the exhaust gas is less than the predetermined speed (negative determination at step S305), the fuel is added from the fuel adding valve 64 while supplying power to the glow plug 66 (step S307). On the other hand, when the flow speed of the exhaust gas is equal to or more than the predetermined speed (positive determination at step S305), the fuel is only added from the fuel adding valve 64 without supplying the power to the glow plug 66 (in a state where the glow plug 66 is not operated) (step S309). In this way, energy consumption in the glow plug 66 is properly restricted and at the same time, the function of the temperature controlling device 60 can be maximized to appropriately maintain the temperature of the exhaust gas purifying member to be within a predetermined temperature range. It should be noted that, in a case of adding the fuel from the fuel adding valve 64 without supplying the power to the glow plug 66, the added fuel is accelerated in oxidation by flowing through the oxidation accelerator 62 and the circumference thereof and then reaches the exhaust gas purifying member, thus making it possible to contribute to a rise in the temperature of the exhaust gas purifying member.

On the other hand, in a case where the temperature of the exhaust gas purifying member is not equal to or less than the predetermined member temperature (negative determination in step S301) or the temperature of the exhaust gas is not less than the predetermined exhaust gas temperature (negative determination in step S303), the operation of the fuel adding valve 64 and the operation of the glow plug 66 are stopped. That is, heating the exhaust gas purifying member by the temperature controlling device 60 is stopped.

Next, a second embodiment in the present invention will be explained. The construction of an internal combustion engine system in a vehicle to which an exhaust gas purifying apparatus according to the second embodiment is applied is substantially similar to the construction of the internal combustion engine system in the vehicle to which the exhaust gas purifying apparatus according to the first embodiment is applied. Therefore, the explanation of the internal combustion engine system in the vehicle to which the exhaust gas purifying apparatus according to the second embodiment is applied is omitted herein. The exhaust gas purifying apparatus in the second embodiment differs in an operation control of a temperature controlling device 160 from the exhaust gas purifying apparatus in the first embodiment. Hereinafter, the difference point will be explained. It should be noted that in the following explanation, components identical to those already explained are referred to as codes identical to those already explained.

In control of the temperature controlling device 160 in the second embodiment, instead of the determination in step S303, a determination in step S303' is made. In step S303', the determination on whether or not a temperature of the exhaust gas purifying member lowers is made. Herein the exhaust gas purifying member for a determination target is the third purifying member 36. A temperature change of the exhaust gas purifying member is found based upon a temperature of the exhaust gas purifying member 36 obtained based upon an output signal from the second temperature sensor 94. In addition, when the temperature grade is equal to or less than a predetermined value, it is determined that the temperature of the exhaust gas purifying member lowers. It should be noted that, when it is determined that the temperature of the exhaust gas purifying member lowers (positive determination in step S303'), step S305 is executed, and when it is determined that the temperature of the exhaust gas purifying member does not lower (negative determination in step S303'), step S311 is executed.

As described above, in the two embodiments, the present invention is applied to the diesel engine, but is not limited thereto, and is applicable to various types of internal combustion engines such as a port injection type of gasoline engine or an in-cylinder injection type of gasoline engine. In addition, fuel in use is not limited to light oil or gasoline, but may be alcohol fuel, an LPG (liquid natural gas) or the like. The cylinder number, the cylinder arrangement type and the like of the internal combustion engine to which the present invention is applied may be arbitrarily determined.

In addition, the number, the kind, the construction and the arrangement order of the exhaust gas purifying members provided in the exhaust passage are not limited to the above embodiments. The number of the exhaust gas purifying member may be one, two, or four. For example, an exhaust gas purifying member containing an oxidation catalyst may be further provided downstream of the third purifying member. Various kinds of well-known catalyst, filter and the like maybe used as the exhaust gas purifying member. The oxidation accelerator 62 may not include the oxidation catalyst having the above construction, and may include a catalyst having a different oxidation function. In addition, for controlling the operations of the fuel adding means and the heating means, only the temperature of the third purifying member 36 is substantially taken into account in the above embodiment, but a temperature of the other exhaust gas purifying member may be taken into account, and temperatures of a plurality of exhaust gas purifying members may be taken into account.

In addition, the temperature of the exhaust gas purifying member may be estimated, for example, based upon an operating condition of an engine other than detected by using the temperature sensor. Further, the flow speed of the exhaust gas may be detected, for example, by using a flow speed sensor provided in the exhaust passage or estimated based upon an operating condition of an engine other than estimated based upon an intake air quantity. Further, the temperature of the exhaust gas may be estimated, for example, based upon an operating condition of an engine other than detected by using the temperature sensor.

It should be noted that, in the two embodiments, the modifications thereof and the like, the present invention is explained in a certain degree of concreteness, but the present invention is not limited to these special examples. It should be understood that the present invention can be modified or changed variously without departing from the spirit or the scope of the invention described in claims. That is, the present invention includes all modifications, applications and its equivalents contained in the concept of the present invention as defined in claims.

## Claims

1. An exhaust gas purifying apparatus in an internal combustion engine with an exhaust passage provided with an exhaust gas purifying member therein, comprising:
a catalyst provided upstream of the exhaust gas purifying member and having an oxidation function;
fuel adding means positioned upstream of the catalyst;
heating means positioned upstream of the catalyst; and
control means for controlling an operation of the fuel adding means and an operation of the heating means,
wherein the control means operates the fuel adding means without operating the heating means when a temperature of the exhaust gas purifying member is within a predetermined temperature range and a flow speed of the exhaust gas is equal to or more than a predetermined speed, and operates the heating means, as well as the fuel adding means when the temperature of the exhaust gas purifying member is within the predetermined temperature range and the flow speed of the exhaust gas is less than the predetermined speed.

2. An exhaust gas purifying apparatus in an internal combustion engine according to claim 1, wherein
the control means operates the fuel adding means without operating the heating means when the temperature of the exhaust gas purifying member is within the predetermined temperature range, a temperature of the exhaust gas is less than a predetermined exhaust gas temperature and the flow speed of the exhaust gas is equal to or more than the predetermined speed.
